# EUROPEAN PATENT APPLICATION

(11) **EP 2 086 241 A2**
(43) Date of publication of application: **05.08.2009**
(21) Application number: 08169889.6
(22) Date of filing: 25.11.2008
(51) Int. Cl.: H04N 7/58, H04N 7/62, H04N 5/45

(54) **Display control apparatus and display control method**

(30) Priority: 29.01.2008 JP 2008017841
(71) Applicant: CANON KABUSHIKI KAISHA, Ohta-ku Tokyo (JP)
(72) Inventor: Kobayashi, Makoto, Tokyo 146-8501 (JP)
(74) Representative: TBK-Patent

(57) **Abstract**

A display control apparatus (101) displays a plurality of video images on one screen based on a plurality of pieces of content data. The display control apparatus has a selection unit configured to select the plurality of pieces of content data to display the plurality of video images. The display control apparatus also has an adjustment unit configured to adjust a timing of display of the plurality of video images based on information included in the plurality of pieces of content data.

## Description

### BACKGROUND OF THE INVENTION

### Field of the Invention

The present invention generally relates to a display control apparatus and a display control method for reproducing a plurality of programs.

### Description of the Related Art

Recent diversification of the broadcasting system encourages wide use of digital televisions compatible with a plurality of broadcasting systems.

Examples of the plurality of broadcasting systems are analog terrestrial broadcasting, digital terrestrial broadcasting that is simultaneous-broadcasting of the analog terrestrial broadcasting, broadcasting satellite (BS) digital broadcasting, and communication satellite (CS) digital broadcasting. Yet another example is cable television broadcasting which uses cables. In the cable television broadcasting, re-transmission of a broadcast wave, such as digital terrestrial broadcasting by radio, is also carried out.

Due to a full transition from the analog terrestrial broadcasting to the digital terrestrial broadcasting, Internet protocol (IP) re-transmission broadcasting that uses an IP network is about to start in regions or places that are out of reach of digital terrestrial broadcast waves. Contents that are published on the Internet have also been provided by way of streaming distribution.

However, delays can occur in broadcasting. Delay time may vary depending on the broadcasting system.

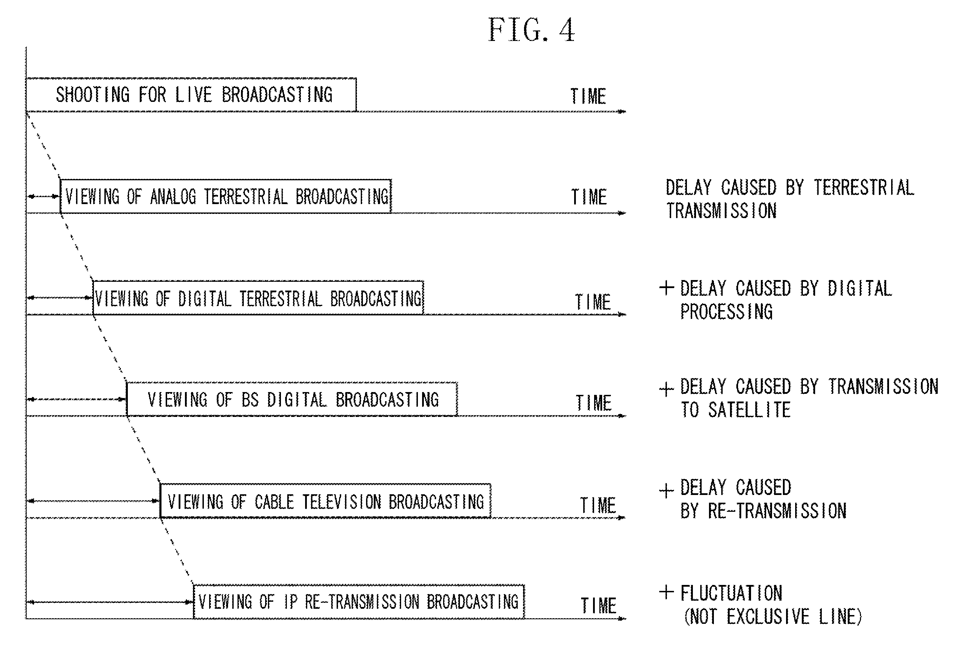

Fig. 4 illustrates delay time for different broadcasting systems. Generally, in the analog terrestrial broadcasting, the time for terrestrial transmission may be a major factor of the delay, which may add to the shooting time for live broadcasting. In the digital terrestrial broadcasting, the time for various digital processes may be a key factor that adds to the delay time. In the BS and CS digital broadcasting, the transmission time to and from a satellite may further add to the delay time. In other words, the reproduction time of a program may be different by the shooting time by several seconds, depending on the broadcasting system. In re-transmission by the cable television broadcasting or IP broadcasting, signal processing for the re-transmission may further add to the delay time, so that the delay time may be longer than that in the digital terrestrial broadcasting or the BS/CS digital broadcasting that do not involve re-transmission. In IP broadcasting using the Internet, a change in the delay time, i.e., fluctuations, may also occur.

Japanese Patent Application Laid-Open No. 2006-128741 discusses mismatching of a start of recording with a start of a program. The mismatching may be caused by a delay time due to a transmission distance of the satellite broadcasting that is longer than the terrestrial broadcasting. To reduce such mismatching, Japanese Patent Application Laid-Open No. 2006-128741 discusses a method for starting recording after a predetermined delay time passes, in a case where the recording of a satellite broadcasting program is reserved.

Japanese Patent Application Laid-Open No. 2006-270824 discusses how when a program broadcast by the simultaneous-broadcasting is switched from the digital terrestrial broadcasting to the analog terrestrial broadcasting, time-lag due to difference between transmission systems can cause discontinuity of the video and audio, even if the same program is being broadcast. A technique is provided in which a time difference in reproduction between the two broadcasting systems is detected, and a reproduction position of the analog terrestrial broadcasting is shifted by the detected time difference. Japanese Patent Application Laid-Open No. 2006-270824 discusses a method that enables relatively smooth reception and reproduction of the same program using the above technique during switching of the simultaneous-broadcasting.

However, in a case of reproducing a plurality of related programs on a plurality of screens, a user may feel disoriented if the timing of reproducing of the programs are not matched. Examples of related programs may be programs focusing on different viewpoints or different objects in the same game of a certain sport.

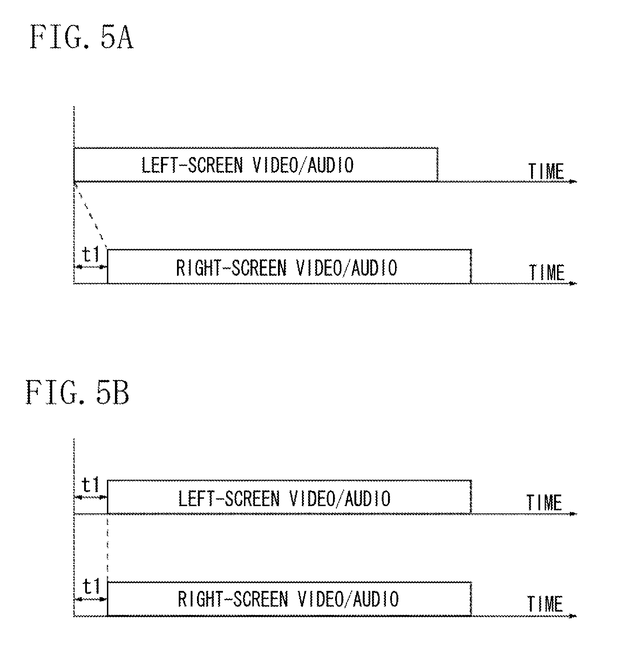

More specifically, for example, when a soccer game is broadcast live, the user may reproduce a program focusing on scenes regarding an overall game flow and broadcast on digital terrestrial broadcasting on a left screen, and reproduce a program focusing on a particular player of the game and broadcast in Internet broadcasting on a right screen. In such a case, although a plurality of related programs (of the same game) are viewed, the delay time may differ because of the different broadcasting systems, and may cause a mismatch in the timing of reproducing of the programs. More specifically, as illustrated in Fig. 5A, reproduction of a video or audio on the right screen may lag behind the reproduction of the video or audio on the left screen, so that the user may feel disoriented.

For example, when content data of a plurality of related programs are received from different servers via the Internet and reproduced, the following may occur. That is, because of differences in paths of the content data, and capabilities and loads of the servers that distribute the content data, the delay time may vary from one program to another and cause mismatching in the timing of reproducing of the programs. In addition, fluctuations may also occur.

For example, when content data of a plurality of related programs are received from externally connected hard disk recorders or digital versatile discs (DVDs) and reproduced, the following may occur. A difference in the timing of reproduction operations may cause a mismatch in the timing of reproducing of the programs.

In these examples, when programs are viewed on the two screens on the left and right sides, reproduction of the program on the right screen may lag behind that on the left screen, so that the user may feel disoriented.

### SUMMARY OF THE INVENTION

The present invention in its first aspect provides a display control apparatus as specified in claim 9.

The present invention in its second aspect provides a method for controlling a display control apparatus as specified in claim 10.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain principles of the invention.

Fig. 1 illustrates a system configuration of a display control apparatus according to a first exemplary embodiment of the present invention.

Fig. 2 is a flowchart illustrating processing during reproduction of two programs according to the first exemplary embodiment.

Fig. 3 illustrates a system configuration of a display control apparatus according to a second exemplary embodiment of the present invention.

Fig. 4 illustrates an example of a relationship among transmission systems and delay time.

Figs. 5A and 5B illustrate examples of time differences and synchronous reproductions during reproduction of two programs.

### DETAILED DESCRIPTION OF THE EMBODIMENTS

Various exemplary embodiments, features, and aspects of the invention will be described in detail below with reference to the drawings.

A first exemplary embodiment of the present invention will be described below referring to the drawings.

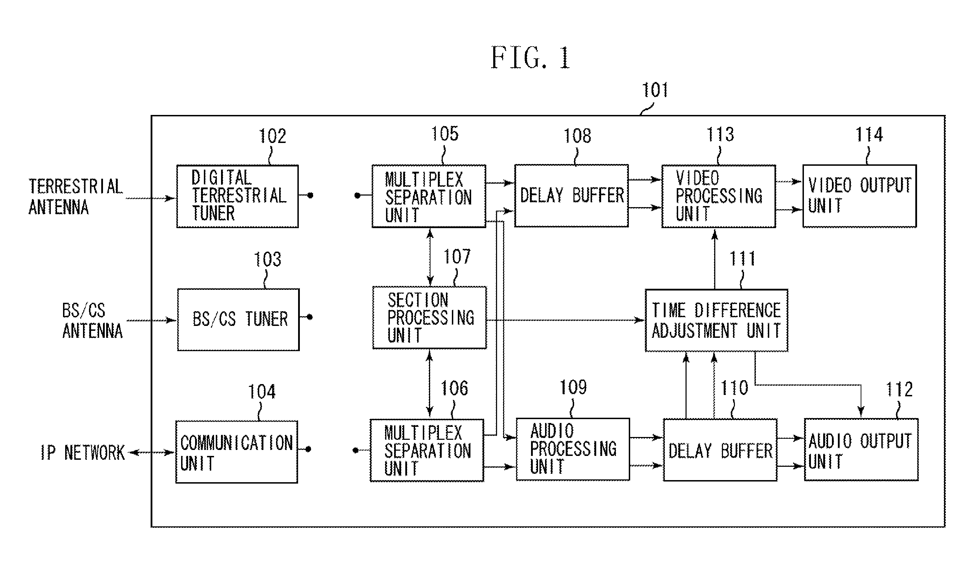

Fig. 1 illustrates a system configuration of a digital television 101 which is a display control apparatus according to the first exemplary embodiment of the present invention. The digital television 101 of the present exemplary embodiment is the display control apparatus which displays a plurality of videos on one screen based on a plurality of pieces of content data (e.g., transport streams corresponding to a plurality of programs). The present invention can be implemented by, for example, in addition to the digital television, a personal computer, a work station, a notebook personal computer (PC), a palm-top PC, various home electric appliances incorporating computers, a game machine, and a portable telephone, or a combination thereof, which can control displaying of a plurality of programs.

In the embodiment of Fig. 1, a digital terrestrial tuner 102 includes a demodulation circuit and an error correction circuit, so that it can demodulate a digital broadcast wave received from a terrestrial antenna to output a transport stream to a multiplex separation unit 105 or 106.

A broadcasting satellite / communication satellite (BS/CS) tuner 103 may similarly demodulate a digital broadcast wave received from a BS/CS antenna to output a transport stream to the multiplex separation circuit 105 or 106. The digital terrestrial tuner 102 and the BS/CS tuner 103 of the present exemplary embodiment may be capable of simultaneously processing two transport streams. Thus, the digital television 101 can perform two-screen displaying of digital terrestrial broadcasting or BS/CS broadcasting based on processing of different transport streams.

A communication unit 104 is an interface for performing various communications with devices via an IP network. The communication unit 104 communicates with a recording apparatus connected to a local area network (LAN) and a server on the Internet to receive various transport streams. The communication unit 104 outputs the received transport streams to the multiplex separation unit 105 or 106. The communication unit 104 of the present exemplary embodiment can simultaneously process two transport streams. Thus, the digital television 101 of this embodiment can perform two-screen displaying of different programs based on processing of different transport streams.

Whether the digital terrestrial tuner 102, the BS/CS tuner 103 and the communication unit 104 output the transport stream to the multiplex separation unit 105 or to the multiplex separation unit 106 may be determined based on a situation. For example, when the multiplex separation unit 105 is being used and the multiplex separation unit 106 is not being used, the transport stream may be output to the multiplex separation unit 106.

Each of the multiplex separation units 105 and 106 may separate a packet from the transport stream received from at least one of the digital terrestrial tuner 102, the BS/CS tuner 103, and the communication unit 104, and may descramble the transport stream. The transport stream of the present exemplary embodiment can include a packet that is multiplexed and that is for reproducing a program, such as for example at least one of a video packetized elementary stream (PES) packet and an audio PES packet. A packet identifier (PID) may be described in a header of a transport (TS) packet that stores the packet. Based on the PID, the program and a type of the packet may be identified. In other words, the PES packets including individual streams for one or more of videos, audios and captions of a same program, may be transmitted by a plurality of TS packets having the same PIDs.

The transport stream can include a packet described in a table of a section format (hereinafter referred to as a section packet) such as program specific information (PSI) or service information (SI). The PSI is information for selecting a broadcast channel to receive the program, and can include a program association table (PAT), a program map table (PMT), a network information table (NIT) and a conditional access table (CAT).

The PAT is transmitted with PID = 0, and includes the PID of the TS packet which transmits the PMT corresponding to each program. In the PAT, the PID of the TS packet, which transmits the NIT described below, is included.

The PMT includes, for each component (each element of video, audio, data, and caption) constituting each program, the PID of the TS packet which transmits the component. The PMT further includes the PID of the TS packet that transmits the CAT. The NIT includes, for each transport stream, information for selecting a channel, such as information about its transmission source and a program multiplexed on the transport stream. The CAT is a table for obtaining unscrambling information.

The SI is information used for services provided by a broadcaster, and includes, for example, an event information table (EIT). The EIT includes a name, start time, a length, and a content of a broadcast program.

Each of the multiplex separation units 105 and 106 separates the section packet from the transport stream received from at least one of the digital terrestrial tuner 102, the BS/CS tuner 103, and the communication unit 104 to send the separated section packet to a section processing unit 107 described below.

Each of the multiplex separation units 105 and 106 may be capable of selecting and separating a PES packet concerning a program from the transport stream based on an instruction from the section processing unit 107. In other words, each of the multiplex separation units 105 and 106 may select the plurality of pieces of content data (e.g., PES packets corresponding to a plurality of programs) A separated video PES packet may be output to a delay buffer 108, and a separated audio PES packet may be output to an audio processing unit 109. The section processing unit 107 processes section packets such as PSI and SI sent from each of the multiplex separation units 105 and 106. In other words, the section processing unit 107 may give an instruction regarding the PES packet to be separated and an instruction for descrambling to each of the multiplex separation units 105 and 106, based on an instruction regarding a program to be viewed that has been entered from an instruction input unit (not shown) by a user, and based on the received section packets.

In a case where two programs are processed, the section processing unit 107 refers to the EIT regarding each program to determine whether the programs are related to each other. The section processing unit 107 notifies a time difference adjustment unit 111 of a result of the determination. In other words, the section processing unit 107 determines a relationship among the plurality of pieces of content data selected by the multiplex separation units 105 and 106.

The delay buffer 108 is a recording unit for temporarily storing video information received from each of the multiplex separation units 105 and 106. In this example, the video information is recorded in its encoded state. In a case where the two programs are reproduced, the delay buffer 108 records pieces of video information sent from both of the multiplex separation units 105 and 106.

The audio processing unit 109 decodes audio information received from each of the multiplex separation units 105 and 106 to output the decoded audio information to a delay buffer 110. The audio processing unit 109 has the capability for decoding a plurality of audio streams to decode sub-audios and audios of the two programs.

The delay buffer 110 is a recording unit for temporarily storing audio information decoded by the audio processing unit 109. In a case where the sub-audios and the audio information of the two programs are decoded, the delay buffer 110 records a plurality of pieces of decoded audio information.

The time difference adjustment unit 111 according to this embodiment obtains a time difference between the timings of reproducing two related programs. The time difference between the timings of reproducing the two programs means a difference between time delays of reproduction time of the two programs with respect to shooting time for live broadcasting, as illustrated for example in Fig. 4. When the section processing unit 107 determines that there is a relationship between the two programs to be reproduced, the time difference adjustment unit 111 performs the following processing. The time difference adjustment unit 111 compares pieces of the audio information of the two programs recorded in the delay buffer 110 with each other to obtain the time difference between timings of reproducing the two programs. In other words, the time difference adjustment unit 111 obtains the time difference "t1" as illustrated in the viewing example of Fig. 5A. Further, the time difference adjustment unit 111 notifies an audio output unit 112 and a video processing unit 113 of information for identifying which one of the two programs that has an earlier reproduction timing, and the obtained time difference "t1". The video processing unit 113 that has received the time difference "t1" from the time difference adjustment unit 111 executes processing so that reproduction of the one of videos of the two programs that has the earlier reproduction timing can be delayed relative to the other video that has the later reproduction timing.

In other words, the time difference adjustment unit 111 matches the timing of display of a plurality of videos that have been determined to have a relationship by the section processing unit 107, based on the information (e.g., decoded audio information) included in the plurality of pieces of content data.

The time difference adjustment unit 111 of the present exemplary embodiment transmits the information for identifying which one of the two programs have the earlier reproduction timing. However, the time difference adjustment unit 111 may also transmit information for identifying which one of the programs has a later reproduction timing.

The audio output unit 112 that has received the time difference "t1" from the time difference adjustment unit 111 delays reproducing of one of the audios of the two programs that has the earlier reproduction timing relative to the other audio that has a later reproduction timing.

The audio output unit 112 reproduces the decoded audio information received from the delay buffer 110. The audio output unit 112 may include speaker and headphone outputs, and reproduces different pieces of audio information, for example, when main and sub audios are simultaneously reproduced or when audios of two programs are reproduced. The audio output unit 112 of the present exemplary embodiment can output, for example, one of two audio streams to the speaker, and the other to the headphone. When the section processing unit 107 determines that the two programs are related, for example, the audio output unit 112 may synthesize the audios to output the result to the same speaker.

The video processing unit 113 decodes the video information recorded in the delay buffer 108, and outputs the decoded audio information to a video output unit 114. The video processing unit 113 has the capability for decoding at least two pieces of video information to reproduce the two programs. The video processing unit 113 may perform the following processing during processing of the two programs when the section processing unit 107 determines that the two programs to be processed are related. More specifically, the video processing unit 113 may delay decoding of a video stream of the program which has the earlier reproduction timing by time "t1" relative to that of the other program which has the later reproduction timing, according to the time difference "t1" between the timings of reproducing the two programs. By this method, as illustrated for example in Fig. 5B, the video processing unit 113 may reproduce the videos of the related programs in synchronization.

The video output unit 114 reproduces the decoded video information received from the video processing unit 113 as a video. More specifically, the video output unit 114 may synthesize the video received from the video processing unit 113 with various pieces of display information such as for example a caption and a volume display, may execute various high-quality processes and field angle adjustment, and displays the processed video. In the case where two programs are processed, the video output unit 114 may execute synthesis processing to display the two videos received from the video processing unit 113 on two screens.

The system configuration of the digital television 101 of the present exemplary embodiment has been described.

Next, an example of a processing flow of a two-program reproduction according to the present exemplary embodiment will be described.

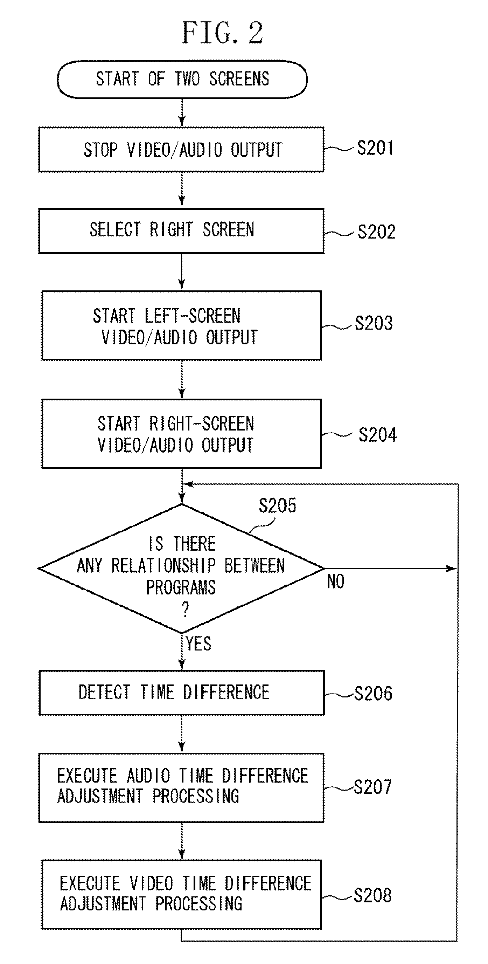

Fig. 2 is a flowchart illustrating an example of a processing flow when the digital television 101 performs reproduction processing for two programs.

In the present exemplary embodiment, a processing example when a user instructs simultaneous reproduction of two programs during one-program reproduction, is described. According to the present exemplary embodiment, when the simultaneous reproduction of two programs is instructed, the two programs are separately displayed on left and right screens. In the digital television 101, a left screen displays a video of the one-program reproduction, and a right screen displays a video of a channel which was displayed on the right screen during the last two-program reproduction as first screens after reception of the instruction of simultaneous reproduction of the two programs. For example, if a program displayed last on the right screen is that of a channel 3 of digital terrestrial broadcasting, a currently broadcast video of the channel 3 of the digital terrestrial broadcasting is displayed first on the right screen by an instruction of next two-program reproduction. When the simultaneous reproduction of two programs is instructed during the one-program reproduction, and when a channel 1 of the digital terrestrial broadcasting is displayed during the one-program reproduction, the left screen displays the channel 1 of the digital terrestrial broadcasting based on the instruction of two-program reproduction.

In Fig. 2, when the instruction of reproducing the two programs is received from the user, the process proceeds to step S201. In step S201, the digital television 101 causes the video output unit 114 and the audio output unit 112 to stop reproduction of a video and an audio respectively. In other words, the video output unit 114 stops outputting the video reproduced during the one-program reproduction. Similarly, the audio output unit 112 stops outputting the audio. In step S201, the outputting of the video and the audio is stopped. However, the video processing unit 113 and the audio processing unit 109 continue the decoding processing of the video and the audio information.

In step S202, the section processing unit 107 performs selection processing of the right screen for the two-program reproduction. In other words, the section processing unit 107 stores a channel of a program that was reproduced on the right screen during the last two-program reproduction. Based on the stored channel, the section processing unit 107 executes the selection processing for the digital terrestrial tuner 102, the BS/CS tuner 103, or the communication unit 104. For example, if a channel 3 of the digital terrestrial broadcasting was displayed last on the right screen during the last two-screen displaying, the section processing unit 107 gives a selection instruction for receiving the channel 3 to the digital terrestrial tuner 102. Then, the digital terrestrial tuner 102 decodes received digital broadcast data, and outputs a transport stream including a program of the channel 3 to one of the multiplex separation units 105 and 106 that is not being used.

In step S203, the digital television 101 resumes the reproduction of the video and the audio of the program on the left screen. More specifically, the video output unit 114 resumes the video outputting of the program during the one-program reproduction that was stopped in step S201 by resetting its output position on the left screen. Similarly, the audio output unit 112 resumes the reproduction of the audio that was stopped in step S201. An order of steps S202 and S203 may also be reversed.

In step S204 (selection procedure), the digital television 101 starts reproduction of a program newly selected for the two-program reproduction. That is, the multiplex separation unit 105 or 106 selects and separates a packet corresponding to the selected channel from the transport stream received based on the selection of step S202.

The multiplex separation unit 105 or 106 has selected and separated a PES packet for the one-program reproduction by the above processing. In other words, in step S204, the multiplex separation unit 105 or 106 selects each of the plurality of pieces of content data (e.g., the PES packets corresponding to the plurality of programs).

The separated video PES packet is sent to the video processing unit 113 via the delay buffer 108. The video processing unit 113 decodes the video information, and then the video output unit 114 outputs the decoded video information. In this case, the video output unit 114 sets the video of the program selected in step S202 to be reproduced on the right screen. The separated audio PES packet is decoded by the audio processing unit 109, and then sent to the audio output unit 112 via the delay buffer 110 to be output.

For audio reproduction, the audio output unit 112 outputs the program for the one-program reproduction to the speaker, and reproduces the audio of the program newly selected for the two-program reproduction via the headphone. However, for example, when the user wishes to simultaneously listen to the audios of the two programs, the audio output unit 112 may output the audios so that they can be simultaneously listened to. The audio output unit 112 may output the audio of only one of the programs.

In step S205 (determination procedure), the section processing unit 107 determines the relationship between the two programs to be reproduced. The section processing unit 107 analyzes an EIT regarding each program, determines whether the two programs are related to each other based on pieces of information such as program names and program contents, and notifies the time difference adjustment unit 111 of its result.

More specifically, the section processing unit 107 determines the relationship between the pieces of content data (e.g., the PES packets corresponding to the plurality of programs) selected by the multiplex separation unit 105 or 106. The determination of the relationship between the two programs by the section processing unit 107 enables automatic time difference detection and delay processing thereafter based on a reproduction instruction of the plurality of programs. If it is determined in step S205 that there is no relationship between the two programs (NO in step S205), the video output unit 114 performs normal two-screen displaying. In this case, the section processing unit 107 periodically analyzes the EITs (e.g., for every one minute) to check whether programs to be reproduced have changed to related programs. Thus, the periodic determination of the relationship between the programs to be reproduced can, when the programs to be selected change, reduce a mismatch in timings of reproducing the plurality of programs, so that a feeling of disorientation on the part of the user can be reduced. The section processing unit 107 may determine the relationship, for example, when it receives an instruction for changing a program to be reproduced.

In step S205, when the section processing unit 107 determines that there is the relationship between the two programs (YES in step S205), the process proceeds to step S206.

In step S206, the time difference adjustment unit 111 compares pieces of the audio information of the two programs with each other to detect a time difference between the timings of reproducing the two programs. Based on the determination result of the section processing unit 107, the time difference adjustment unit 111 compares the pieces of the audio information of the two programs recorded in the delay buffer 110 with each other to obtain the time difference. In other words, the time difference "t1" as illustrated in Fig. 5A may be obtained. For example, the time difference adjustment unit 111 determines whether an audio similar to a certain audio extracted from one (program 1) of the programs to be simultaneously reproduced is present in the other program (program 2). If the similar audio is present, when a timing of reproducing the audio in one program (program 1) is "3:25:20" and a timing of reproducing the similar audio in the other program (program 2) is "3:15:25", the time difference "t1" is "5 seconds". If no similar audio is present, the time difference adjustment unit 111 extracts another audio from one program (program 1) to determine whether an audio similar to the extracted other audio is present in the other program (program 2). The time difference adjustment unit 111 repeats the processing until a similar audio is detected.

Thus, the time difference among the timings of reproducing the plurality of the programs can be obtained by the comparison of pieces of the audio information of the plurality of programs when the audios of the programs are almost similar. The audios of the programs may be almost similar, for example, in a case where a same sport game is shot by a plurality of cameras from a same shooting place (e.g., one camera shoots an overall game while the other camera shoots a specific player by zooming). The above described processing is not limited to sports but also can be applied to orchestras and musicals. Further, it can be applied when a microphone may be shared or cameras are set in different positions.

The time difference adjustment unit 111 notifies the audio output unit 112 and the video processing unit 113 of the information for identifying which one of the two programs has an earlier reproduction timing and the time difference "t1" obtained in the above manner.

In step S207, the audio output unit 112 performs delay processing and reproduction of the audio information. The audio output unit 112 delays outputting of the audio information having the earlier reproduction timing by "t1" from that having the later reproduction timing, according to the time difference "t1" between the timings of reproducing the two programs as notified by the time difference adjustment unit 111 in step S206. By delaying the timing of reproducing, as illustrated in Fig. 5B, simultaneous reproduction of the audios may be performed.

In step S208 (adjustment procedure), the video processing unit 113 performs the delay processing and reproduction of the video information. The video processing unit 113 delays, according to the time difference "t1" between the timings of reproducing the two programs as notified from the time difference adjustment unit 111 in step S206, decoding processing of the video information so that outputting of the video information having an earlier reproduction timing can lag by "t1" relative to that having a later reproduction timing. In the above example, the video processing unit 113 delays the decoding processing of the video information so that outputting of the video information of the program 1 can lag by 5 seconds relative to that of the program 2. Thus, the video output from the video output unit 114 becomes similar to that illustrated in Fig. 5B. In other words, the video processing unit 113 matches the timings of reproducing the plurality of videos that are determined to have the relationship in step S205 based on pieces of information (e.g., decoded audio information) included in the plurality of pieces of content data (e.g., the PES packets corresponding to the plurality of programs). The video outputting of steps S203 and S204 may be started after adjustment processing of steps S207 and S208 are performed when presence of the relationship is determined in step S205.

The processing of steps S205 to S208 may be repeated at fixed intervals during displaying of the two programs. Therefore, the present exemplary embodiment can deal with a change of a program due to ending of the program or due to user' s selection. Even when the program is not changed, the repeated processing can improve accuracy of synchronization. A problem of fluctuation, i.e., a change in delay time regarding reproduction of a program which may occur, for example, in IP broadcasting via the Internet, can be reduced and even effectively solved. More specifically, in an environment such as the IP broadcasting where the delay time is not constant, the mismatch in the timing of reproducing the plurality of related programs can be reduced by repeating detection of the time difference "t1" executed in step S206, so that a feeling of disorientation on the part of the use can be reduced and even alleviated. If these effects are unnecessary, the processing does not have to be repeated. The detection of the time difference in step S206 and the delay processing in steps S207 and S208 may be performed when a correction instruction of the time difference or program changing instruction from the user is detected.

An example of the processing flow when the two screens are activated in the digital television 101 which is the display control apparatus according to the present exemplary embodiment, has been described.

The delay processing may be performed for various pieces of the display information, such as at least one of the caption and the volume display, similar to the videos.

According to the present exemplary embodiment, sizes of the left and right screens during reproduction of the two programs may be equal to or different from each other. The present invention can also be applied in a case where a screen of another related program is displayed within a screen for displaying one program.

The present exemplary embodiment describes reproduction of only two programs. However, the present invention can also be applied to reproduction of two or more programs.

According to the present exemplary embodiment, the section processing unit 107 refers to the EIT of each program to determine a relationship. However, other methods can also be employed. For example, the section processing unit 107 may obtain information regarding a program to be received from a website of the Internet, and determine the relationship based on the obtained information.

According to the present exemplary embodiment, contents received by the digital television 101 are at least one of broadcast waves from the terrestrial antenna, the BS/CS antenna, and a transport stream received via the IP network. However, contents may also be received from other interfaces. The present invention can be applied to streams that are entered via various digital interfaces, such as a high-definition multimedia interface (HDMI).

According to the present exemplary embodiment, the time difference adjustment unit 111 adjusts the time difference. In addition to this, the user may also finely adjust the time difference. More specifically, according to the present exemplary embodiment, the time difference adjustment unit 111 adjusts the time difference in steps S207 and S208 according to the time difference detected in step S206. The user can also finely adjust the timing for the plurality of contents which are adjusted to be reproduced by the adjustment processing. By the fine adjustment, the timings of reproducing the plurality of contents can be relatively accurately matched.

In the present exemplary embodiment, the process of matching the timings of reproducing the videos corresponding to the plurality of pieces of the selected content data is performed when the content data are related to each other. Thus, a processing load applied when timings of reproducing a plurality of pieces of unrelated content data are matched can be reduced. However, processing for matching the timing of display of a plurality of videos displayed on one screen may be performed regardless of a relationship. In other words, the processing for determining the presence of a relationship may be omitted.

Next, a second exemplary embodiment of the present invention will be described focusing on differences from the first exemplary embodiment with reference to the drawings. According to the first exemplary embodiment, the time difference between the timings of reproducing the plurality of programs is detected based on the decoded audio information. The second exemplary embodiment is different from the first in that the time difference is detected based on real time information (time information) at shooting time of each program.

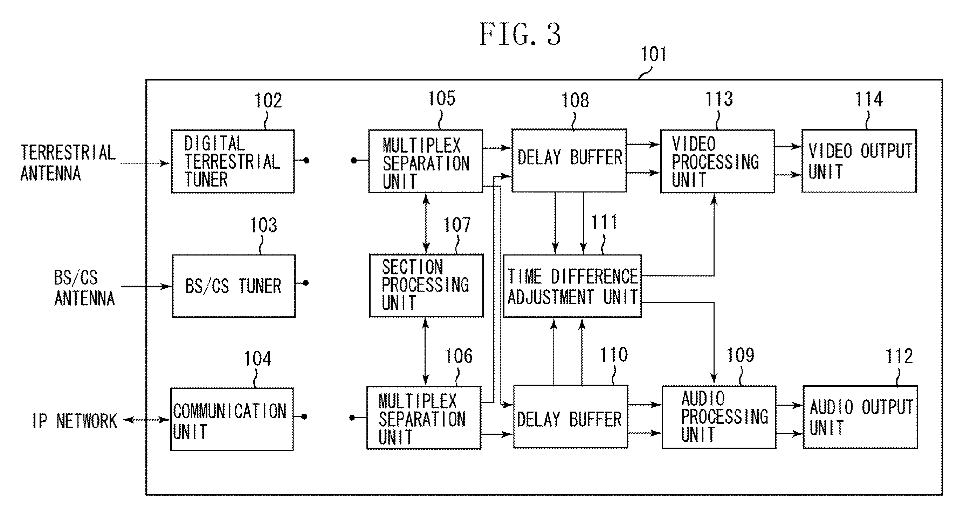

Fig. 3 illustrates a system configuration of a digital television 101 according to the second exemplary embodiment of the present invention. The digital television 101 of the present exemplary embodiment is a display control apparatus, which displays a plurality of videos based on a plurality of pieces of content data (transport streams corresponding to a plurality of programs). The present invention can be implemented by, for example, in addition to the digital television, a personal computer, a work station, a notebook PC, a palm-top PC, various home electric appliances incorporating computers, a game machine, and a portable telephone, or a combination thereof, which can reproduce a plurality of programs.

In the embodiment shown in Fig. 3, a digital terrestrial tuner 102, a BS/CS tuner 103, a communication unit 104, a section processing unit 107, a delay buffer 108, a video processing unit 113, and a video output unit 114 are similar to those illustrated in Fig. 1, and thus description thereof will not be repeated.

Multiplex separation units 105 and 106 of the second exemplary embodiment are different from those of the first exemplary embodiment in that an output destination of an audio PES packet selected and separated from a transport stream is a delay buffer 110.

The delay buffer 110 is a recording unit for temporarily storing audio information received from each of the multiplex separation units 105 and 106. In the present exemplary embodiment, the audio information is recorded in its encoded state. In a case where two programs are reproduced, the delay buffer 110 records pieces of the encoded audio information sent from both of the multiplex separation units 105 and 106.

The time difference adjustment unit 111 obtains, in the case where the two programs are reproduced, a time difference between the timings of reproducing the two programs. The time difference between the timings of reproducing the two programs means a difference between time delays of reproduction time of the programs to be reproduced with respect to shooting time for live broadcasting, as illustrated for example in Fig. 4. When the section processing unit 107 determines that there is a relationship between the two programs to be reproduced, the time difference adjustment unit 111 performs time difference detection. The time difference adjustment unit 111 of the present exemplary embodiment refers to the delay buffers 108 and 110, and compares pieces of real time information (e.g., time information) of the shooting time included in each of the two programs to detect the time difference. The real time information of the shooting time may be included in a header of each of a video PES packet and the audio PES packet. The time difference adjustment unit 111 obtains the time difference between the timings of reproducing the two programs by comparing one audio with another, and one video with another, in the real time information of the shooting time. Thus, the time difference adjustment unit 111 obtains the time difference "t1," as illustrated for example in Fig. 5A.

The time difference adjustment unit 111 notifies an audio processing unit 109 and a video processing unit 113 of information for identifying which one of the two programs has an earlier reproduction timing, and the detected time difference "t1". The video processing unit 113 that has received notification of the time difference from the time difference adjustment unit 111 executes processing so that reproduction of the one of the videos of the two programs that has the earlier reproduction timing can be delayed relative to the one that has a later timing.

More specifically, the time difference adjustment unit 111 matches the timing of display of a plurality of videos that have been determined to have a relationship by the section processing unit 107, based on information (e.g., real time information of shooting time) included in the plurality of pieces of content data (e.g., PES packets corresponding to the plurality of programs).

The audio processing unit 109 decodes the audio information recorded in the delay buffer 110, and outputs the decoded audio information to an audio output unit 112. The audio processing unit 109 of the present exemplary embodiment has the capability of decoding at least two audio streams. The audio processing unit 109 delays, during reproduction of the two related programs, decoding of an audio stream of one program which has an earlier reproduction timing by "t1" than that of the other program that has a later timing based on the time difference "t1" received from the time difference adjustment unit 111. By this method, as illustrated for example in Fig. 5B, audios may be synchronously reproduced during reproduction of the plurality of related programs.

The audio output unit 112 receives the audio information from the audio processing unit 109 as an audio. The audio output unit 112 may for example include speaker and headphone outputs, and may reproduce different pieces of audio information, for example, when main and sub audios are simultaneously reproduced or when audios of two programs are reproduced. The audio output unit 112 of the present exemplary embodiment may output one of two audio streams to the speaker, and the other to the headphone. When the section processing unit 107 determines that the two programs are related, for example, the audio output unit 112 may synthesize the audios to output the result to the same speaker.

The system configuration of the digital television 101 of the present exemplary embodiment has been described.

Next, referring to Fig. 2, an example of a processing flow of two-program reproduction according to the present exemplary embodiment will be described. The digital television 101 of the present exemplary embodiment is the display control apparatus for displaying the plurality of videos based on the plurality of pieces of content data (transport streams corresponding to the plurality of programs).

Similar to the first exemplary embodiment, in the second exemplary embodiment, a processing example when a user instructs simultaneous reproduction of two programs during one-program reproduction is described. According to the present exemplary embodiment, a left screen displays a video of the one-program reproduction, and a right screen displays a video of a channel which was displayed on the right screen during the last two-program reproduction, as first screens after reception of the instruction for simultaneous reproduction of the two programs. For example, if a program displayed last on the right screen is that of a channel 3 of digital terrestrial broadcasting, a currently broadcast video of the channel 3 of the digital terrestrial broadcasting is displayed first on the right screen by an instruction of next two-program reproduction.

In Fig. 2, when the instruction for reproducing the two programs is received from the user, the process proceeds to step S201. In step S201, the digital television 101 causes the video output unit 114 and the audio output unit 112 to stop reproduction of a video and an audio respectively. In other words, the video output unit 114 stops outputting the video reproduced during the one-program reproduction. Similarly, the audio output unit 112 stops outputting the audio. In step S201, the outputting of the video and the audio is stopped. However, the video processing unit 113 and the audio processing unit 109 continue the decoding processing of the video and the audio information.

In step S202, the section processing unit 107 performs selection processing of the right screen for the two-program reproduction. In other words, the section processing unit 107 stores a channel of a program that was reproduced on the right screen during the last two-program reproduction. Based on the stored channel, the section processing unit 107 executes the selection processing for the digital terrestrial tuner 102, the BS/CS tuner 103, or the communication unit 104. For example, if a channel 3 of the digital terrestrial broadcasting was displayed last on the right screen during the last two-screen displaying, the section processing unit 107 gives a selection instruction for receiving the channel 3 to the digital terrestrial tuner 102. Then, the digital terrestrial tuner 102 decodes received digital broadcast data, and outputs a transport stream including a program of the channel 3 to one of the multiplex separation units 105 and 106 that is not being used.

In step S203, the digital television 101 resumes the reproduction of the video and the audio of the program on the left screen. That is, the video output unit 114 resumes the video outputting of the program during the one-program reproduction that was stopped in step S201 by resetting its output position on the left screen. Similarly, the audio output unit 112 resumes the reproduction of the audio that was stopped in step S201. An order of steps S202 and S203 may also be reversed.

In step S204 (selection procedure), the digital television 101 starts reproduction of a program newly selected for the two-program reproduction. More specifically, the multiplex separation unit 105 or 106 selects and separates a packet for reproducing the selected channel from the transport stream received based on the selection of step S202.

The multiplex separation unit 105 or 106 has selected and separated a PES packet for the one-program reproduction by the above processing. In other words, in step S204, the multiplex separation unit 105 or 106 selects each of the plurality of pieces of content data (e.g., the PES packets corresponding to the plurality of programs).

The separated video PES packet is sent to the video processing unit 113 via the delay buffer 108. The video processing unit 113 decodes the video information, and then the video output unit 114 outputs the decoded video information. In this case, the video output unit 114 sets the video of the program selected in step S202 to be reproduced on the right screen. The separated audio PES packet is sent to the audio processing unit 109 via the delay buffer 110, and the audio information is decoded to be output from the audio output unit 112.

For the audio reproduction, the audio output unit 112 outputs the program for the one-program reproduction to the speaker, and reproduces the audio of the program newly selected for the two-program reproduction via the headphone. Thus, when the programs which have the relationship but different audio output are reproduced, feelings of disorientation on the part of the used can be reduced and even alleviated, by reproducing the audios with different devices. However, for example, when the user wishes to simultaneously listen to the audios of the two programs, the audio output unit 112 may output the audios so that they can be simultaneously listened to.

In step S205 (determination procedure), the section processing unit 107 determines the relationship between the two programs to be reproduced. The section processing unit 107 analyzes an EIT regarding each program, determines whether the two programs are related to each other based on pieces of information such as program names and program contents, and notifies the time difference adjustment unit 111 of its result. The section processing unit 107 of the present exemplary embodiment determines that they are related programs when, for example, program names and program contents written in the EITs match each other between the two programs. The section processing unit 107 may also extract keywords from the program names and the program contents of the EITs, and compare the keywords to determine the relationship.

More specifically, the section processing unit 107 determines the relationship between the pieces of content data (e.g., the PES packets corresponding to a plurality of programs) selected by the multiplex separation unit 105 or 106. The determination of the relationship between the two programs by the section processing unit 107 enables the automatic time difference detection and delay processing based on the reproduction instruction of the plurality of programs. The section processing unit 107 may determine the relationship between programs by receiving information indicating that there is the relationship between the programs from the user. If it is determined in step S205 that there is no relationship between the two programs (NO in step S205), the video output unit 114 performs normal two-screen displaying. In this case, the section processing unit 107 periodically analyzes the EITs to check whether programs to be reproduced have changed to related programs. Thus, the periodic determination of the relationship between the programs to be reproduced can, when the programs to be selected change, reduce a mismatch in timing of reproducing the plurality of programs. The section processing unit 107 may determine the relationship, for example, when it receives an instruction for changing a program to be reproduced.

In step S205, when the section processing unit 107 determines that there is the relationship between the two programs (YES in step S205), the process proceeds to step S206.

In step S206, the time difference adjustment unit 111 compares pieces of the real time information at the shooting time of the two programs with each other to detect the time difference between the timings of reproducing the two programs. Based on the determination result of the section processing unit 107, the time difference adjustment unit 111 compares pieces of the real time information of the shooting time included in the headers of the PES packets recorded in the delay buffers 108 and 110 with each other to obtain the time difference "t1".

More specifically, the delay buffer 108 of the present exemplary embodiment sends, at certain time, the video PES packets of the two related programs received from the multiplex separation unit 105 and 106 to the time difference adjustment unit 111. Further, the delay buffer 110 sends, at a certain time, the audio PES packets of the two related programs received from the multiplex separation unit 105 and 106 to the time difference adjustment unit 111. Then, the time difference adjustment unit 111 compares the pieces of the real time information of shooting time included in the headers of the video PES packets of the two programs received from the delay buffer 108, with each other to obtain a time difference "t2" regarding video data. For example, when the real time information of the shooting time included in the video PES packet of one of the programs to be simultaneously reproduced indicates "5:00:00" while the real time information of the other program indicates "5:00:01", "t2" is "1 second". Similarly, the time difference adjustment unit 111 compares the pieces of the real time information of the shooting time included in the headers of the audio PES packets, with each other to obtain a time difference "t3" regarding audio data. Then, the time difference adjustment unit 111 of the present exemplary embodiment obtains the time difference "t1" from an average value of the obtained time differences "t2" and "t3". Accordingly, the time difference "t1," as illustrated for example in Fig. 5A, may be obtained. However, the time difference "t1" may also be obtained from one of the time differences regarding the video data and the audio data. The video data and the audio data of the video and audio PES packets of the two programs may be output so that real time of the shooting times can match each other.

The time difference adjustment unit 111 notifies the audio processing unit 109 and the video processing unit 113 of information for identifying which one of the two programs has an earlier reproduction timing, and the time difference "t1" obtained in the above manner.

In step S207, the audio output unit 112 performs delay processing and reproduction of the audio information. The audio output unit 112 delays outputting of the audio information having the earlier reproduction timing by "t1" than that having the later timing reproduction, according to the time difference "t1" between the timings of reproducing the two programs as notified by the time difference adjustment unit 111 in step S206. By delaying the timing of reproducing, as illustrated in Fig. 5B, the simultaneous reproduction of the audios may be performed.

In step S208 (adjustment procedure), the video processing unit 113 performs the delay processing of the video information. The video processing unit 113 delays, according to the time difference "t1" between the timings of reproducing the two programs as notified from the time difference adjustment unit 111 in step S206, decoding processing of the video information so that outputting of the video information having an earlier reproduction timing can be delayed by "t1" relative to that having a later reproduction timing. The video output unit 114 that has received the decoded video information from the video processing unit 113 performs, as illustrated in Fig. 5B, synchronous reproduction of the videos of the two programs. In other words, the video processing unit 113 matches the timings of reproducing the plurality of videos that are determined to have the relationship in step S205 based on pieces of information (e.g., real time information of shooting time) included in the plurality of pieces of content data (e.g., the PES packets corresponding to the plurality of programs). The video outputting of steps S203 and S204 may be started after adjustment processing of steps S207 and S208 are performed when presence of the relationship is determined in step S205.

The processing of steps S205 to S208 may be repeated at fixed intervals during displaying of the two programs. Therefore, the present exemplary embodiment can deal with a change of a program due to ending of the program or due to user' s instruction. Even when the program is not changed, the repeated processing can improve accuracy of synchronization. The problem of the fluctuation, i.e., a change in delay time regarding the reproduction of the program which may occur, for example, in the IP broadcasting via the Internet, can be reduced and even effectively solved. More specifically, in the environment such as the IP broadcasting where the delay time is not constant, the mismatch in the timing of reproducing the plurality of related programs can be reduced by repeating detection of the time difference "t1" executed in step S206. If these effects are unnecessary, the processing does not have to be repeated. The detection of the time difference in step S206 and the delay processing in steps S207 and S208 may be performed when the correction instruction of time difference or program changing instruction from the user is detected.

An example of the processing flow when the two screens are activated in the digital television 101 which is the display control apparatus according to the present exemplary embodiment has been described.

The delay processing may be performed for various pieces of the display information, such as at least one of the caption and the volume display similar to the videos.

According to the present exemplary embodiment, sizes of the left and right screens during reproduction of the two programs may be equal to or different from each other. The present invention can also be applied to a case where a screen of another related program is displayed within a screen for displaying one program.

The present exemplary embodiment describes reproduction of only two programs. However, the present invention can also be applied to reproduction of two or more programs.

According to the present exemplary embodiment, the section processing unit 107 refers to the EIT of each program to determine a relationship. However, other methods can also be employed. For example, the section processing unit 107 may obtain information regarding a program to be received from a website of the Internet, and determine the relationship based on the obtained information.

According to the present exemplary embodiment, contents received by the digital television 101 are at least one of broadcast waves from the terrestrial antenna, the BS/CS antenna, and a transport stream received through the IP network. However, contents may also be received from other interfaces. The present invention can be applied to streams that are entered via various digital interfaces such as a high-definition multimedia interface (HDMI).

According to the present exemplary embodiment, the pieces of the real time information of the shooting times are included in the headers of the video and audio PES packets. However, the present invention can also be implemented when the piece of the real time information are included in other places, such as headers of TS packets, section packets, or video and audio encoded data. In this case, in step S206, the time difference adjustment unit 111 of the digital television 101 compares the pieces of the real time information of the shooting time of the two programs included in places as described above with each other to detect the time difference between the timings of reproducing the two programs. Then, in step S208 (the adjustment procedure), the video processing unit 113 performs the delay processing according to the time difference between the timings of reproducing the two programs as notified by the time difference adjustment unit 111 in step S206. Thus, the video processing unit 113 matches the timings of displaying the plurality of videos that are determined to have the relationship in step S205 based on pieces of information (e.g., the real time information of the shooting time) included in the plurality of pieces of content data (e.g., packets corresponding to the plurality of programs).

According to the present exemplary embodiment, the time difference adjustment unit 111 adjusts the time difference. In addition to this, the user may also finely adjust the time difference. More specifically, according to the present exemplary embodiment, the time difference adjustment unit 111 adjusts the time difference in steps S207 and S208 according to the time difference detected in step S206. The user can also finely adjust the timing for the plurality of contents which are adjusted to be reproduced by the adjustment processing. By the fine adjustment, the timings of reproducing the plurality of contents can be relatively accurately matched.

In the present exemplary embodiment, the processing for matching the timings of reproducing the videos corresponding to the plurality of pieces of the selected content data is performed when the content data are related to each other. Thus, the processing load applied when timings of reproducing a plurality of pieces of unrelated content data are matched can be reduced. However, processing for matching the timing of display of a plurality of videos displayed on one screen may be performed regardless of a relationship. In other words, the processing for determining the presence of a relationship may be omitted.

The present invention can also be achieved by the following embodiment. More specifically, a storage medium that stores program codes of software having computer-executable instructions for realizing the functions of the aforementioned exemplary embodiments may be supplied to a system or an apparatus. A computer (or central processing unit (CPU) or micro processing unit (MPU)) of the system or the apparatus reads the computer-executable instructions of the program codes stored in the storage medium to execute them. In this case, the computer-executable instructions read from the storage medium realize the functions of the aforementioned exemplary embodiments, and the storage medium storing the computer-executable instructions constitutes an embodiment in accordance with the present invention.

For the storage medium for supplying the program codes, for example, at least one of a floppy disk, a hard disk, an optical disk, a magneto-optical disk, a compact disc read-only memory (CD-ROM), a CD recordable (CD-R), a magnetic tape, a nonvolatile memory card, a ROM, an a digital versatile disc (DVD), can be used.

The present invention is not limited to the embodiment in which the computer executes the computer-executable instructions to realize the functions in accordance with the aforementioned exemplary embodiments. In other words, the present invention can include a case where based on instructions of the program codes, an operating system (OS) operated in the computer executes a part or all of actual processing steps to realize the functions in accordance with the aforementioned exemplary embodiments.

In one embodiment, the present invention may include the following case. The computer-executable instructions of the program codes read from the storage medium may be written in a memory included in a function expansion board inserted into the computer or a function expansion unit connected to the computer. Then, based on the instructions of the program codes, a CPU included in the function expansion board or the function expansion unit executes a part or all of actual processing steps to realize functions in accordance with the aforementioned exemplary embodiments.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions.
A display control apparatus (101) displays a plurality of video images on one screen based on a plurality of pieces of content data. The display control apparatus has a selection unit configured to select the plurality of pieces of content data to display the plurality of video images. The display control apparatus also has an adjustment unit configured to adjust a timing of display of the plurality of video images based on information included in the plurality of pieces of content data.

## Claims

1. A display control apparatus (101) that displays a plurality of video images on one screen based on a plurality of pieces of content data, the display control apparatus comprising:
a selection unit configured to select the plurality of pieces of content data to display the plurality of video images;
a determination unit configured to determine a relationship among the plurality of pieces of content data selected by the selection unit; and
an adjustment unit configured to adjust a timing of display of the plurality of video images that are determined to have the relationship by the determination unit, based on information included in the plurality of pieces of content data.

2. The display control apparatus according to claim 1, wherein the adjustment unit adjusts the timing of display of the plurality of video images that are determined to have the relationship, based on comparison of audio data included in the content data.

3. The display control apparatus according to claim 1, wherein the adjustment unit adjusts the timing of display of the plurality of video images that are determined to have the relationship, based on comparison of pieces of time information included in the content data.

4. The display control apparatus according to claim 1, wherein determination of the relationship by the determination unit is carried out based on comparison of pieces of information for identifying programs included in the content data.

5. The display control apparatus according to claim 1, wherein the determination of the relationship by the determination unit is carried out based on information obtained from a storage apparatus that stores information regarding the content data.

6. The display control apparatus according to claim 1, wherein the adjustment unit repeatedly adjusts the timing of display of the plurality of video images when the plurality of video images that have the relationship are displayed.

7. The display control apparatus according to claim 1, wherein the adjustment unit adjusts reproduction time of audio data included in the content data that is determined to have the relationship, based on the information included in the content data.

8. The display control unit according to claim 1, further comprising an input unit configured to enter an instruction for adjusting the timing of display of the plurality of video images adjusted by the adjustment unit.

9. A display control apparatus (101) that displays a plurality of video images on one screen based on a plurality of pieces of content data, the display control apparatus comprising:
a selection unit configured to select the plurality of pieces of content data to display the plurality of video images; and
an adjustment unit configured to adjust a timing of display of the plurality of video images based on information included in the plurality of pieces of content data.

10. A method for controlling a display control apparatus (101) that displays a plurality of video images on one screen based on a plurality of pieces of content data selected to display the plurality of video images, the method comprising:
adjusting a timing of display of the plurality of video images based on information included in the plurality of pieces of content data.

11. A computer readable storage medium containing computer-executable instructions for controlling a display control apparatus to display a plurality of video images on one screen based on a plurality of pieces of content data selected to display the plurality of video images, the computer-readable medium comprising:
computer-executable instructions for adjusting a timing of display of the plurality of video images based on information included in the plurality of pieces of content data.
